# EUROPÄISCHE PATENTANMELDUNG

(11) **EP 2 141 468 A1**
(43) Veröffentlichungstag der Anmeldung: **06.01.2010**
(21) Anmeldenummer: 09008113.4
(22) Anmeldetag: 20.06.2009
(51) Int. Cl.: G01J 5/08, G01J 5/10, G01J 5/16, G01J 5/06

(54) **Sensoranordnung zur pyrometrischen Messung der Temperatur eines Messobjektes**

(30) Priorität: 02.07.2008 DE 102008031285
(71) Anmelder: Mahlo GmbH & Co. KG, 93342 Saal (DE)
(72) Erfinder: Balzer, Herbert, 93047 Regensburg (DE)
(74) Vertreter: Glück, Martin

(57) **Zusammenfassung**

Die Erfindung betrifft eine Sensoranordnung (1) zur pyrometrischen Messung der Temperatur eines Messobjektes (2) bestehend aus einer Wärmesenke (3) und einem ersten Temperaturfühler (5) zur Ermittlung der Temperatur (TW) der Wärmesenke (3), wobei die Wärmesenke (3) und der erste Temperaturfühler (5) thermisch leitend verbunden sind. Besonders vorteilhaft umfasst die Sensoranordnung (1) ein flaches, vorzugsweise scheibenartiges Absorberelement (6) zur Aufnahme der vom Messobjekt (2) abgestrahlten Wärme- bzw. Infrarotstrahlung (7) und einen zweiten Temperaturfühler (8) zur Ermittlung der Temperatur (TA) des flachen, vorzugsweise scheibenartigen Absorberelementes (6), wobei der zweite Temperaturfühler (8) mit dem flachen, vorzugsweise scheibenartigen Absorberelement (6) thermisch leitend verbunden ist.

## Beschreibung

Die Erfindung betrifft eine Sensoranordnung zur pyrometrischen Messung der Temperatur eines Messobjektes gemäß dem Oberbegriff des Patentanspruches 1.

Zur Messung der Temperatur, insbesondere Oberflächentemperatur von Werkstoffen und Waren in Trockenöfen und Wärmbehandlungsanlagen werden zur pyrometrischen Temperaturmessung ausgebildete Sensoranordnungen, so genannte IR-Strahlungspyrometer eingesetzt, die entweder außerhalb der Anlage oder bei entsprechender Auslegung der Komponenten der Sensoranordnung im Inneren der jeweiligen Anlage vorgesehen sind. Hauptanwendungsgebiet derartiger IR-Strahlungspyrometer ist die berührungslose "Online"-Messung der Oberflächentemperatur von Werkstoffen und Waren, z.B. von Warenbahnen wie Stoffe, Teppiche, Folien, Pappe, Papier, Bleche etc. in Trockenöfen und Wärmebehandlungsan lagen.

Eine Installation im Inneren einer Anlage bietet den Vorteil, dass die Sensoranordnung direkt im Ofen im geringen Abstand zum Messobjekt installiert werden kann. Dadurch ist gewährleistet, dass sich nahezu ausschließlich das Messobjekt im Erfassungswinkel des Sensorsystems befindet und aufgrund des geringen Arbeitsabstands der Messfehler durch Absorption der IR-Strahlung der Umgebungsatmosphäre z.B. aufgrund von Wasserdampf zwischen Sensorsystem und Messobjekt stark minimiert wird. Hierzu werden hohe Anforderungen an das Sensorsystem betreffend Wasserverträglichkeit und Temperaturresistenz gestellt. Beispielsweise beträgt die Temperatur in derartigen Anlagen zwischen 250 °C und 400 °C.

Aus der DE 298 18 875 U1 ist beispielsweise bereits ein Sensor zur pyrometrischen Messung der Temperatur eines Messobjektes bekannt, der ein zur Strahlungsmessung vorgesehenes Thermopile bzw. eine so genannte "Thermosäule" aufweist. Das Thermopile umfasst mehrere in Serie geschaltete Thermoelemente, die beidseitig von einer hitzebeständigen Folie, insbesondere einer Polyimidfolie bedeckt sind. Die Thermoelemente sind hierbei radial angeordnet und weisen erste und zweite Bereiche auf, wobei die ersten Bereiche zum Zentrum des Sensors weisen und die zweiten Bereiche am Rand der radialen Anordnung liegen und mit einem Wärmeleiter, der gleichzeitig als Halterung des Thermopiles dient, in thermischen Kontakt stehen. Ferner ist ein Temperaturfühler zur Ermittlung der Temperatur des Wärmeleiters (Halterung) vorgesehen. Die Wärmestrahlung wird von der Polyimidfolie absorbiert, wodurch sich die Kontaktstellen der Thermoelemente im Zentrum der Folie stärker erwärmen als die, die im thermischen Kontakt zum Wärmeleiter stehen und zudem nicht direkt bestrahlt werden. Die Temperaturdifferenz zwischen diesem ersten und zweiten Bereich führt zu einer Thermospannung. Mittels des im Wärmeleiter vorgesehenen Temperaturfühlers wird die Absoluttemperatur des Wärmeleiters bzw. der Wärmesenke bestimmt. Anschließend wird aus der Absoluttemperatur und der Thermospannung über eine geeignete Kalibrierung die Objekttemperatur ermittelt.

Ferner ist aus DE 196 15 244 B4 ebenfalls ein Sensor zur pyrometrischen Messung der Temperatur eines Messobjektes bei hoher Umgebungstemperatur bekannt, der im Innenraum eines Heißlufttrockners oder einer Wärmebehandlungsanlage vorgesehen ist. Der Sensor weist wiederum eine Thermosäule auf, die mehrere in Serie geschalte Thermoelemente bzw. Drahtelemente umfasst. Die in Reihe geschalteten Thermoelemente werden hierbei axial durch einen zylindrischen Körper geführt, der aus einem hitzebeständigen schlecht wärmeleitenden Material besteht. Die Lötstellen, welche die Thermoelemente miteinander verbinden, liegen auf den Grundflächen des zylindrischen Körpers auf. Eine Kompensation von nicht strahlungsbedingten Temperaturunterschieden zwischen den Lötstellen wird dadurch erreicht, dass ein Teil der an sich der Strahlung des Messobjekts ausgesetzten Lötstellen durch einen strahlungsundurchlässigen Schild abgedeckt ist. Zur Temperaturkompensation wird die Eigentemperatur mit einem Thermoelement am Schild gemessen.

Weitere bekannte IR-Strahlungspyrometer verwenden ebenfalls Thermopiles aus Halbleitermaterialien, die bei Umgebungstemperaturen bis ca. 200 °C einsetzbar sind. Nachteil derartiger Thermopiles bzw. Thermosäulen ist die relativ komplexe geometrische Anordnung der in Serie geschalteten Thermoelemente, die auf dem jeweiligen Trägermaterial technisch aufwendig aufgebracht werden müssen. Darüber hinaus ist eine funktionelle Montage derartiger Thermosäulen innerhalb einer Sensoranordnung mit einem zusätzlichen technischen Aufwand verbunden.

Ausgehend hiervon liegt der Erfindung die Aufgabe zugrunde, ein Sensorsystem zur pyrometrischen Messung der Temperatur eines Messobjektes anzugeben, bei dem die zuvor beschriebenen Nachteile vermieden werden. Die Aufgabe wird ausgehend von den Merkmalen des Oberbegriffes des Patentanspruches 1 durch dessen kennzeichnende Merkmale gelöst.

Der wesentliche Aspekt der erfindungsgemäßen Sensoranordnung ist darin zu sehen, dass ein flaches, vorzugsweise scheibenartiges Absorberelement zur Aufnahme der vom Messobjekt abgestrahlten Wärme- bzw. Infrarotstrahlung und ein zweiter Temperaturfühler zur Ermittlung der Temperatur des flachen, vorzugsweise scheibenartigen Absorberelementes vorgesehen sind, wobei der zweite Temperaturfühler mit dem flachen, vorzugsweise scheibenartigen Absorberelement thermisch leitend verbunden ist. Besonders vorteilhaft weist die erfindungsgemäße Sensoranordnung keine Thermosäule auf, sondern verwendet einen einzelnen, einfachen Temperaturfühler, der vorzugsweise im Zentrum eines flachen Absorberelementes, insbesondere einer Absorberscheibe vorgesehen ist.

Mittels der erfindungsgemäßen Sensoranordnung wird somit eine Temperaturdifferenz zwischen dem Absorberelement, welches die vom Messobjekt abgestrahlte Infrarotstrahlung empfängt und der Wärmesenke, die mit dem Absorberelement mechanisch verbunden ist, erzeugt und aus der Temperaturdifferenz und der Absoluttemperatur der Wärmesenke die Temperatur des Messobjektes bestimmt. Hierbei ist die mit dem zweiten Temperaturfühler der Absorberscheibe gemessene Temperatur von der Wärmestrahlung des Messobjekts und von der Umgebungstemperatur der Halterung der Absorberscheibe abhängig.

Vorteilhafte Weiterbildungen der Erfindung sind den weiteren abhängigen Patentansprüchen zu entnehmen. Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand von Zeichnungen an einem Ausführungsbeispiel näher beschrieben. Es zeigen:
- Fig. 1: beispielhaft eine schematische Schnittzeichnung der erfindungsgemäßen Sensoranordnung und
- Fig. 2: beispielhaft mehrere Ausführungsformen des in der Wärmesenke vorgesehenen Absorberelementes.

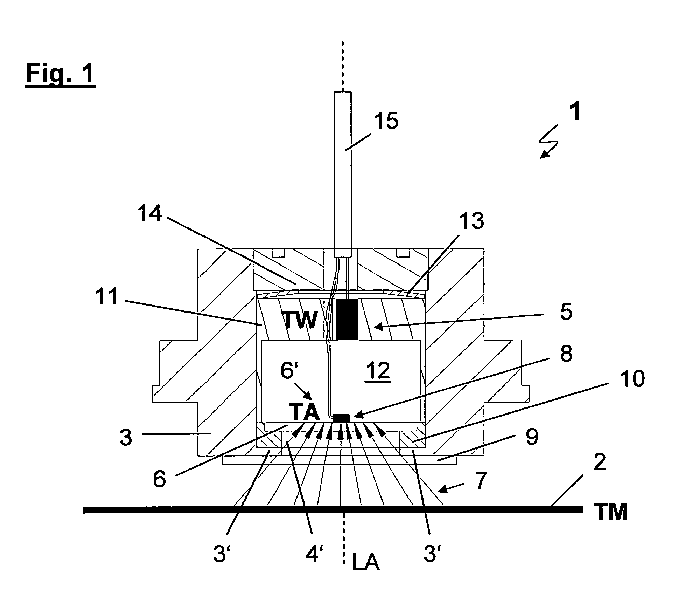

In Fig. 1 ist eine schematische Schnittzeichnung einer Sensoranordnung 1 zur berührungslosen bzw. pyrometrischen Messung der Temperatur, insbesondere Oberflächentemperatur eines Messobjektes 2 dargestellt, wobei die Sensoranordnung 1 im vorliegenden Ausführungsbeispiel oberhalb des Messobjektes 2 angeordnet ist.

Das Messobjekt 2 kann beispielsweise ein Werkstoff oder eine Ware, insbesondere eine Warenbahn, beispielsweise Stoffe, Teppiche, Folien, Pappe, Papier, Bleche etc. sein, die zu Trocknungszwecken in einen Trockenofen oder eine Wärmebehandlungsanlage eingebracht sind. In dem Trockenofen bzw. der Wärmebehandlungsanlage herrschen beispielsweise Temperaturen zwischen 250 °C und 400 °C.

Die Sensoranordnung 1 ist üblicherweise in einem Sensorgehäuse (nicht in den Figuren dargestellt) angeordnet, welches aus Stahl, insbesondere Edelstahl hergestellt ist und gegenüber der Umgebung mittels eines hitzebeständigen Dichtungsmaterials wie beispielsweise Perfluorelastomer abgedichtet ist, wobei das verwendete Dichtungsmaterial im Dauerbetrieb bei einer Umgebungstemperatur von bis zu 400 °C einsetzbar ist.

Die Sensoranordnung 1 besteht aus einer Wärmesenke 3, welche aus einem Material mit einer hohen Wärmeleitfähigkeit hergestellt ist und die zumindest eine hohlzylindrische Ausnehmung oder eine entsprechende Bohrung 4 aufweist, die konzentrisch zur Längsachse LA der Wärmesenke 3 verläuft. Vorzugsweise ist die Masse der Wärmesenke 3 relativ groß gewählt, um schnelle, beispielsweise innerhalb weniger Sekunden entstehende Umgebungstemperaturschwankungen puffern zu können.

Zur Ermittlung der Temperatur TW der Wärmesenke 3 ist ein erster Temperaturfühler 5 vorgesehen, der mit der Wärmesenke 3 thermisch leitend verbunden ist. Ferner weist die Sensoranordnung 1 ein flaches, vorzugsweise scheibenartiges Absorberelement 6 zur Aufnahme der vom Messobjekt 2 abgestrahlten Wärme- bzw. Infrarotstrahlung 7 auf.

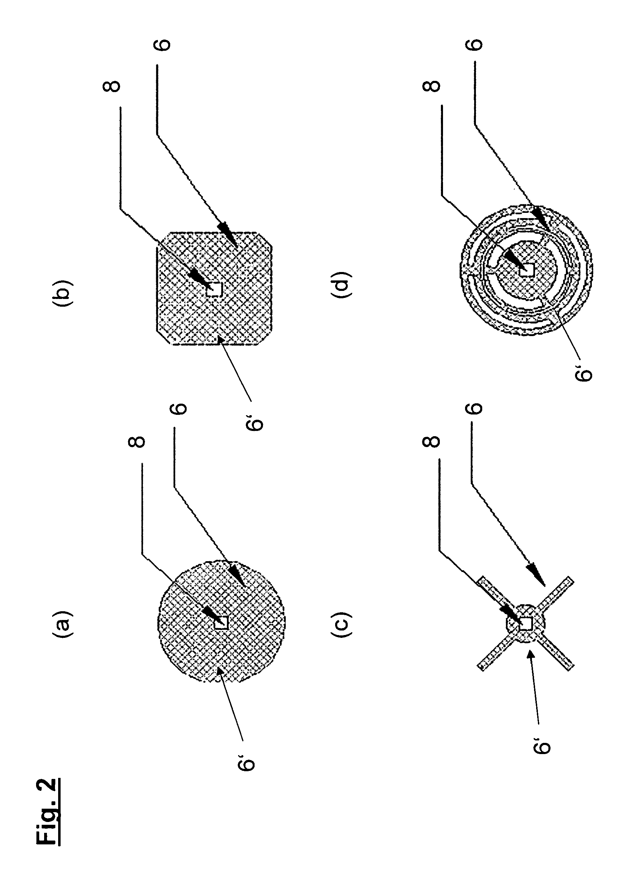

Das flache, vorzugsweise scheibenartige Absorberelement 6 ist aus einem schlecht wärmeleitenden, hitzebeständigen Material wie beispielsweise Glas, Polyimid, Edelstahl oder dergleichen hergestellt und kann beispielsweise die in den Figuren 2 (a) bis (d) dargestellten Ausführungsformen aufweisen.

Auf der vom Messobjekt 2 abgewandten Oberfläche des flachen, vorzugsweise scheibenartigen Absorberelementes 6 ist ein zweiter Temperaturfühler 8 angeordnet, der zur Ermittlung der Temperatur TA des Absorberelementes 6 vorgesehen ist. Hierbei wird der zweite Temperaturfühler 8 vorzugsweise im Zentrum des flachen, vorzugsweise scheibenartigen Absorberelementes 6 befestigt, und zwar beispielsweise mittels einer Klebe- oder Lötverbindung. Hierzu können Hochtemperaturkleber und Lote mit einem über der Betriebstemperatur der Sensoranordnung 1 liegenden Schmelzpunkt Anwendung finden.

Das Sensorprinzip basiert auf der Erzeugung einer Temperaturdifferenz TD zwischen dem Absorberelement 6, welches die vom Messobjekt 2 abgestrahlte Infrarotstrahlung 7 empfängt und der Wärmesenke 3, die mit dem Absorberelement 6 mechanisch verbunden ist. Die Temperatur TW der Wärmesenke 3 und die Temperatur TA des Absorberelements 6 werden mittels des ersten und zweiten Temperaturfühlers 5, 8 gemessen, wobei die auf der Absorberscheibe 6 gemessene Temperatur TA zwischen der Temperatur TM des Messobjekts 2 und der Temperatur TW der Wärmesenke 3 liegt und sich insbesondere bedingt durch die Wärme- bzw. Infrarotstrahlung 7 vom Messobjekt 2 zum Absorberelement 6 einstellt. Aus der Temperaturdifferenz TD und der Temperatur TW der Wärmesenke 3 kann über eine vorher durchgeführte Kalibrierung die Temperatur TM des Messobjektes 2 bestimmt werden. Um eine möglichst große Temperaturdifferenz TD beispielsweise zwischen 0 °C und 50 °C zu erzeugen, ist es vorteilhaft, eine schlechte Wärmeleitung zwischen dem Absorberelement 6 und der Wärmesenke 3 zu gewährleisten.

Das flache, vorzugsweise scheibenartige Absorberelement 6 wird hierzu im Bereich der zum Messobjekt 2 gerichteten Öffnung 4' der Ausnehmung oder Bohrung 4 angeordnet, und zwar derart, dass dessen Unterseite nahezu parallel zur Oberfläche des Messobjektes 2 verläuft. An der Unterseite der Wärmesenke 3 ist zur Abdeckung der Öffnung 4' der Ausnehmung bzw. Bohrung 4 eine IR-durchlässige Abschirmung 9, insbesondere ein Fenster oder eine Linse vorgesehen, die beispielsweise aus Silizium, Germanium, Zinkselenid oder einem Material mit ähnlichen Materialeigenschaften hergestellt ist.

In einer bevorzugten Ausführungsform wird das flache, vorzugsweise scheibenartige Absorberelement 6 in der Bohrung 4 der Wärmesenke 3 in einem Haltering 10 aufgenommen, der in die Bohrung 4 eingeführt ist. Beispielsweise ist der Durchmesser der Öffnung 4' kleiner als der Durchmesser der Bohrung 4 gewählt, so dass sich ein vorzugsweise mit der Stirnseite der Wärmesenke 3 bündig verlaufender Haltesteg 3' ausbildet, an dem sich der von oben in die Bohrung 4 eingeführte Haltering 10 abstützt. Der Haltering 10 ist vorzugsweise aus einem schlecht wärmeleitenden Material wie beispielsweise Teflon oder Polyimid hergestellt.

Der Haltering 10 wird ferner mittels eines topfartigen Hülsenelementes 11 von oben gegen den Haltesteg 3' gepresst. Das Hülseelement 11 weist beispielsweise eine dünnwandige Topfform auf, wobei das offene Ende bzw. die Stirnseite der dünnen Hülsenwandung am Haltering 10 anliegt und somit mit dem Absorberelement 6 einen geschlossenen Innenraum 12 ausbildet. Das Hülseelement 11 besteht aus einem gut wärmeleitenden Metall wie beispielsweise Aluminium, Messing oder dergleichen, wobei die mit der Wärmesenke 3 in thermischen Kontakt stehende Hülsenwandung beispielsweise eine Wandstärke von 0,5 bis 1 mm aufweist, um die Kontaktfläche zum Haltering 10 so gering wie möglich zu halten. Die topfförmige Ausführungsform des Hülseelementes 11 trägt insbesondere zur Reduzierung der Wärmeleitung vom Hülsenelement 11 zum Absorberelement 6 bei. Auch kann im Haltering 10 eine Ausfräsung zur Aufnahme des Absorberelementes 6 vorgesehen sein, mittels der die Wärmeleitung zwischen Wärmesenke 3 und dem Absorberelement 6 zusätzlich reduziert wird.

In einer weiteren Ausführung sind die Innenwände des topfartigen Hülsenelementes 11 mit einer IR-reflektierenden Beschichtung, beispielsweise einer Lack-, einer galvanisch abgeschiedenen Chrom- oder Nickelschicht versehen, welche auch zur Reduzierung der Wärmestrahlung von der Wärmesenke 3 zum Absorberelement 6 beiträgt.

Auch kann das Sensorgehäuse (nicht in den Figuren dargestellt), in der sich die Sensoranordnung 1 befindet, evakuiert oder anstelle von Luft mit einem schlecht wärmeleitenden Füllgas, vorzugsweise einem Edelgas, befüllt sein. Durch Vorsehen des schlecht wärmeleitenden Füllgases wird die Wärmeleitung vom Hülsenelement 11 zum Absorberelement 6 zumindest deutlich reduziert. Abhängig vom Füllgas kann zudem die Ansprechzeit der Sensoranordnung verkürzt oder verlängert werden.

In der nach oben ebenfalls offenen Bohrung 4 schließt sich ein Federelement, insbesondere eine Tellerfeder 13 an, die in Kontakt mit einer Schraube 14 steht. Die Schraube 14 ist in einem am oberen Ende der Bohrung 4 vorgesehenen Innengewinde geführt und somit entlang der Längsachse LA verstellbar ausgebildet. Durch Einschrauben der Schraube 14 entlang der Längsachse LA wird das Hülsenelement 11 mittels des Federelementes 13 auf den Haltering 10 gepresst und mittels der Schraube 14 gesichert. Hierbei sorgt das Federelement 13 auch bei Änderungen der Umgebungstemperatur für einen gleichmäßigen Anpressdruck und gleicht die unterschiedliche thermische Ausdehnung der beteiligten Materialien aus.

In einer vorzugsweise parallel zur Längsachse LA verlaufenden Ausnehmung im Hülsenelement 11 ist der erste Temperaturfühler 5 angeordnet und beispielsweise mittels eines hitzebeständigen Wärmeleitklebers oder Silikon fixiert. Über den ersten Temperaturfühler 5 wird die Temperatur TW der mit dem Hülsenelement 11 in thermischen Kontakt stehenden Wärmesenke 3 bestimmt. Die Anschlussleitungen des ersten Temperaturfühlers 5 werden über Bohrungen im Federelement 13 und der Schraube 14 nach hinten an ein abgeschirmtes Signalkabel 15 geführt.

Auf der zum Innenraum 12 des topfartigen Hülsenelementes 11 weisenden Rückseite des Absorberelementes 6 ist beispielsweise der zweite Temperaturfühler 8 aufgebracht, dessen Zuleitungen durch den Innenraum 12 über Bohrungen im Hülsenelement 11, ggf. der Tellerfeder 13 und der Schraube 14 aus der Wärmesenke 3 an das abgeschirmte Signalkabel 15 geführt werden.

Der erste und/oder zweite Temperaturfühler 5, 8 können beispielsweise durch einen Platin-Messwiderstand oder Nickel-Messwiderstand oder ein Thermoelement gebildet sein. Die auf Keramiksubstraten in Dünnschichttechnik hergestellten Platin- oder Nickel-Messwiderstände sind in verschiedenen geometrischen Abmessungen erhältlich und können beispielsweise mit ihrer Rückseite auf das Absorberelement 6 entweder aufgeklebt oder aufgelötet werden.

Um eine möglichst große Temperaturdifferenz TD zur Wärmesenke 3 zu erzeugen ist eine kleine Bauform vorteilhaft, um mittels des zweiten Temperaturfühlers 8 die Temperatur TA des Absorberelementes 6 in einem möglichst kleinen Bereich im Zentrum des Absorberelementes 6 messen zu können. Eine kleine Bauform sorgt zudem aufgrund der geringen Masse für eine kurze Ansprechzeit.

Eine Reduktion der Wärmeleitung über die Anschlussdrähte des ersten oder zweiten Temperaturfühlers 5, 8 wird durch Verwendung von möglichst dünnen, aus schlecht wärmeleitenden Metall bestehenden Anschlussleitung erreicht. Eine mechanisch stabile und gut handhabbare Ausführungsform ist beispielsweise die Ausbildung des ersten und zweiten Temperaturfühlers 5, 8 als Pt1000-Messwiderstände mit geringer Grundfläche und dünnen Anschlussdrähten. Durch die Verwendung von baugleichen Messwiderständen ist eine im Vergleich zu den aus dem Stand der Technik bekannten Thermopiles einfachere elektronische Auswertung möglich. Insbesondere kann die Temperatur TA, TW des ersten und zweiten Temperaturfühlers 5, 8 mit einer Elektronikeinheit, die vorzugsweise nur einen einzigen Messkanal besitzt, erfasst werden, in dem abwechselnd zwischen dem ersten und zweiten Temperaturfühler 5, 8 umgeschaltet wird. Dadurch wirken sich systematische Messfehler, die durch Temperatur- oder Alterungsbedingte Veränderungen der Messelektronik entstehen, auf die gemessenen Temperaturen TA und TW gleich aus, d.h. die Temperaturdifferenz TD bleibt unverändert.

Bei den weiteren in den Figuren 2 (b) bis (d) dargestellten Ausführungsformen des Absorberelementes 6 ist die Auflagefläche durch eine quadratische Ausführung der Absorberscheibe 6 gemäß Figur 2 (b) mit lediglich einer Halterung an den Ecken oder einer Ausführung mit Haltestegen gemäß Figur 2 (c) gegenüber der runden, d.h. scheibenartigen Ausführung gemäß Figur 2 (a) noch weiter reduziert. In Figur 2 (d) wird die Wärmeleitung des Absorberelementes 6 durch eine konzentrisch zur Längsachse LA verlaufende ringförmige Schlitzstruktur reduziert, indem eine effektive Verlängerung des Weges zwischen der Wärmesenke 3 und dem zweiten Temperaturfühler 8 im Zentrum 6' des Absorberelementes 6 erreicht wird.

Eine mechanisch stabile Ausführung des Absorberelementes bzw. der Absorberscheibe 6 besteht beispielsweise aus einer runden 20 bis 35 µm dicken Edelstahlfolie mit einem Durchmesser von 15 bis 30 mm, die durch Stanzen, Erodieren oder Laserschneiden hergestellt ist.

Zur Erhöhung der vom Messobjekt 2 absorbierten Strahlungsmenge kann das Absorberelement 6 mit einem matt schwarzen Lack, insbesondere einem Hochtemperaturlack, lackiert werden, und zwar vorzugsweise die zum Messobjekt 2 gerichtete Unterseite bzw. Oberfläche. Die Rückseite des Absorberelementes 6 kann beispielsweise mit einem Infrarotstrahlung reflektierenden Lack beschichtet sein, um die von der Wärmesenke 3 erzeugte Wärme- bzw. IR-Strahlung zumindest teilweise zu reflektieren.

In einer weiteren Ausführungsform ist nur das Zentrum 6' schwarz lackiert, z.B. die zentrale Fläche in der Ausführungsform gemäß Figur 2 (d), so dass auch die von der Wärmesenke 3 auf die Vorderseite der Absorberscheibe 6 auftreffende Wärmestrahlung 7 reduziert wird. Dies hat zusätzlich den Vorteil, dass dadurch die effektive Sensorfläche verkleinert und der Erfassungswinkel des Sensors reduziert wird.

In einer weiteren Ausführungsform ist das Hülsenelement 11 als Infrarotstrahlung reflektierender Hohlspiegel gefertigt, so dass der auf dem Absorberelement 6 aufgebrachte zweite Temperaturfühler 8 im Mittelpunkt des Hohlspiegels zu liegen kommt. Dadurch wird die vom Absorberelement 6 abgestrahlte Wärmestrahlung auf den zweiten Temperaturfühler 8 zurückreflektiert.

Ebenso kann die Innenfläche des Hülsenelementes 11 einen Parabolspiegel ausbilden, der als Sammeloptik für die Infrarotstrahlung 7 genutzt wird. Dazu wird beispielsweise das Absorberelement 6 gemäß der Ausführungsform nach Figur 2 (c) ausgeführt und hierbei der zweite Temperaturfühler 8 derart auf dem Absorberelement 6 angeordnet, dass dieser sich im Brennpunkt des Parabolspiegels befindet. Die vom Messobjekt 2 erzeugte IR-Strahlung 7 trifft bei dieser Ausführungsform der Sensoranordnung 1 sowohl von vorne als auch nach Reflexion am Parabolspiegel von hinten auf das Absorberelement 6 bzw. auf den zweiten Temperaturfühler 8 auf. Hierdurch kann die Sammeleffizienz gesteigert und der Erfassungswinkel verkleinert werden. Die Verspiegelung kann in der einfachsten Form beispielsweise auch durch Polieren der Innenfläche des Hülsenelementes 11 erzeugt werden.

Die Erfindung wurde voranstehend an einem Ausführungsbeispiel beschrieben. Es versteht sich, dass Änderungen oder Modifikationen der Erfindung möglich sind, ohne dass hierdurch der Erfindungsgedanke verlassen wird.

### Bezugszeichenliste

- 1: Sensoranordnung
- 2: Messobjekt
- 3: Wärmesenke
- 3': Haltestege
- 4: Ausnehmung bzw. Bohrung
- 4': Öffnung
- 5: erster Temperaturfühler
- 6: Absorberelement
- 6': Zentrum
- 7: Wärme- bzw. Infrarotstrahlung
- 8: zweiter Temperaturfühler
- 9: IR-durchlässige Abschirmung
- 10: Haltering
- 11: Hülsenelement
- 12: Innenraum
- 13: Federelement
- 14: Schraube
- 15: Signalkabel

- LA: Längsachse
- TA: Temperatur Absorberelement
- TD: Temperaturdifferenz
- TM: Temperatur Messobjekt
- TW: Temperatur Wärmesenke

## Patentansprüche

1. Sensoranordnung zur pyrometrischen Messung der Temperatur (TM) eines Messobjektes (2) bestehend aus einer Wärmesenke (3) und einem ersten Temperaturfühler (5) zur Ermittlung der Temperatur (TW) der Wärmesenke (3), wobei die Wärmesenke (3) und der erste Temperaturfühler (5) thermisch leitend verbunden sind, **dadurch gekennzeichnet,**
**dass** ein flaches, vorzugsweise scheibenartiges Absorberelement (6) zur Aufnahme der vom Messobjekt (2) abgestrahlten Wärme- bzw. Infrarotstrahlung (7) und ein zweiter Temperaturfühler (8) zur Ermittlung der Temperatur (TA) des flachen, vorzugsweise scheibenartigen Absorberelementes (6) vorgesehen sind, wobei der zweite Temperaturfühler (8) mit dem flachen, vorzugsweise scheibenartigen Absorberelement (6) thermisch leitend verbunden ist.

2. Sensoranordnung nach Anspruch 1, **dadurch gekennzeichnet, dass** die Wärmesenke (3) eine konzentrische, hohlzylindrische Ausnehmung oder eine entsprechende Bohrung (4) aufweist und das flache, vorzugsweise scheibenartige Absorberelement (6) im Bereich der zum Messobjekt (2) gerichteten Öffnung (4') der Ausnehmung oder Bohrung (4) angeordnet ist.

3. Sensoranordnung nach Anspruch 1 oder 2, **dadurch gekennzeichnet, dass** der zweite Temperaturfühler (8) im Zentrum (6') des flachen, vorzugsweise scheibenartigen Absorberelementes (6) angeordnet ist.

4. Sensoranordnung nach einem der Ansprüche 1 bis 3, **dadurch gekennzeichnet, dass** der erste und/oder zweite Temperaturfühler (5, 8) durch einen Platin-Messwiderstand oder einen Nickel-Messwiderstand oder ein Thermoelement gebildet sind.

5. Sensoranordnung nach einem der Ansprüche 1 bis 4, **dadurch gekennzeichnet, dass** das flache, vorzugsweise scheibenartige Absorberelement (6) aus einem schlecht wärmeleitenden, hitzebeständigen Material wie z.B. Glas, Polyimid, Edelstahl oder dergleichen hergestellt ist.

6. Sensoranordnung nach einem der Ansprüche 1 bis 5, **dadurch gekennzeichnet, dass** das Sensorprinzip der Sensoranordnung (1) auf der Bestimmung einer Temperaturdifferenz (TD) zwischen dem Absorberelement (6) und der Wärmesenke (3) basiert, wobei aus der Temperaturdifferenz (TD) und der Absoluttemperatur der Wärmesenke (3) die Temperatur (TM) des Messobjektes (2) bestimmt wird und/oder dass zur Erfassung der Temperatur der Wärmesenke (TW) und des Absorberelements (TA) eine Elektronikeinheit mit vorzugsweise einem einzigen umschaltbaren Messkanal vorgesehen ist.

7. Sensoranordnung nach einem der Ansprüche 2 bis 6, **dadurch gekennzeichnet, dass** das flache, vorzugsweise scheibenartige Absorberelement (6) in der Bohrung (4) der Wärmesenke (3) in einem Haltering (10) aufgenommen ist, der aus einem schlecht wärmeleitenden Material wie beispielsweise Teflon oder Polyimid hergestellt ist und/oder dass in der Bohrung (4) zur Aufnahme des ersten Temperaturfühlers (5) ein Hülsenelement (11) vorgesehen ist, welches eine dünnwandige Topfform aufweist und in thermischen Kontakt mit der Wärmesenke (3) steht.

8. Sensoranordnung nach Anspruch 7, **dadurch gekennzeichnet, dass** das Hülsenelement (11) mit der offenen Stirnseite am Haltering (10) anliegt und mit dem Absorberelement (6) einen geschlossenen Innenraum (12) ausbildet und/oder dass die Innenwände des topfartigen Hülsenelementes (11) mit einer Infrarotstrahlung reflektierenden Beschichtung, beispielsweise einer Lack-, einer galvanisch abgeschiedenen Chrom- oder Nickelschicht versehen sind.

9. Sensoranordnung nach einem der Ansprüche 1 bis 8, **dadurch gekennzeichnet, dass** zur Abdeckung der Öffnung (4') der Ausnehmung bzw. Bohrung (4) eine infrarotdurchlässige Abschirmung (9) vorgesehen, die beispielsweise aus Silizium, Germanium, Zinkselenid oder einem Material mit ähnlichen Materialeigenschaften hergestellt ist.

10. Sensoranordnung nach Anspruch 9, **dadurch gekennzeichnet, dass** die infrarotdurchlässige Abschirmung (9) durch ein Fenster oder eine Linse gebildet ist.

11. Sensoranordnung nach einem der Ansprüche 1 bis 10, **dadurch gekennzeichnet, dass** das die Sensoranordnung (1) in einem Sensorgehäuse aufgenommen ist, die evakuiert oder mit einem Füllgas, vorzugsweise einem Edelgas befüllt ist und/oder dass das flache, vorzugsweise scheibenartige Absorberelement (6) rund, quadratisch oder rechteckförmig ausgebildet und/oder dass das flache, vorzugsweise scheibenartige Absorberelement (6) einen vorzugsweise kreisförmigen Absorberbereich zur Aufnahme des zweiten Temperaturfühlers (8) und mehrere vom Absorberbereich nach außen weggehende Haltestege aufweist.

12. Sensoranordnung nach einem der Ansprüche 1 bis 11, **dadurch gekennzeichnet, dass** die Wärmeleitfähigkeit des flachen, vorzugsweise scheibenartigen Absorberelementes (6) durch konzentrisch zum Zentrum (6') verlaufende zumindest teilweise ringförmige Schlitze reduziert ist.

13. Sensoranordnung nach Anspruch 12, **dadurch gekennzeichnet, dass** mehrere Schlitze unterschiedlicher Breite und/oder Länge vorgesehen sind, die eine Schlitzstruktur bilden.

14. Sensoranordnung nach einem der Ansprüche 1 bis 13, **dadurch gekennzeichnet, dass** das Absorberelement (6) aus einem folienartigen Material, beispielsweise einer 20 bis 35 µm dicken Edelstahlfolie gebildet ist und/oder dass das flache, vorzugsweise scheibenartige Absorberelement (6) zumindest teilweise mit einem matt schwarzen Lack, insbesondere einem Hochtemperaturlack, lackiert ist, und zwar vorzugsweise an der zum Messobjekt 2 gerichteten Unterseite und/oder dass die Rückseite des flachen, vorzugsweise scheibenartigen Absorberelementes (6) mit einem Infrarotstrahlung reflektierenden Lack beschichtet ist.

15. Sensoranordnung nach einem der Ansprüche 7 bis 21, **dadurch gekennzeichnet, dass** das Hülsenelement (11) einen Infrarotstrahlung reflektierender Hohlspiegel ausbildet und/oder dass die Innenfläche des Hülsenelementes (11) einen Parabolspiegel ausbildet.
